# FASCICULE DE BREVET EUROPEEN

(11) **EP 1 374 187 B1**
(45) Date de publication et mention de la délivrance du brevet: **17.01.2007**
(21) Numéro de dépôt: 02722383.3
(22) Date de dépôt: 26.03.2002
(51) Int. Cl.: G07C 5/08, H04N 7/18

(54) **DISPOSITIF POUR LA MEMORISATION D'UNE SEQUENCE VISUELLE A LA SUITE DE L'EMISSION D'UN SIGNAL D'ALARME A BORD D'UN VEHICULE**
VORRICHTUNG ZUM SPEICHERN EINER VISUELLEN SEQUENZ NACH DER AUSSENDUNG EINES ALARMSIGNALES AN BORD EINES FAHRZEUGES
DEVICE FOR STORING A VISUAL SEQUENCE IN RESPONSE TO A WARNING SIGNAL ON BOARD A VEHICLE

(30) Priorité: 30.03.2001 FR 0104611; 25.10.2001 FR 0114079
(43) Date de publication de la demande: 02.01.2004
(73) Titulaire: Bendavid, Claude, 75012 Paris (FR); Benhamou, Eric, 75014 Paris (FR); Funaro, Michel, 94300 Vincennes (FR)
(72) Inventeur: BENDAVID, Claude, F-75012 Paris (FR); BENHAMOU, Eric, F-75014 Paris (FR); FUNARO, Michel, F-94300 Vincennes (FR); ROUCH, Jean, CH-1208 Genève (CH)
(74) Mandataire: de Saint-Palais, Arnaud Marie
(86) Numéro de dépôt international: PCT/FR2002/001049
(87) Numéro de publication internationale: WO 2002/080115

(56) Documents cités:
- EP-A- 1 028 395
- WO-A-00/17822
- WO-A-00/51083
- WO-A-95/28783
- WO-A-96/00957
- WO-A-99/40545
- DE-A- 19 702 363
- GB-A- 2 268 608
- US-A- 4 843 463

## Description

La présente invention concerne un dispositif pour l'enregistrement et/ou la mémorisation d'une séquence visuelle à la suite de l'émission d'un signal d'alarme par un capteur situé à bord d'un véhicule.

Elle s'applique notamment, mais non exclusivement, à la constitution d'un témoignage visuel permettant de visualiser les circonstances d'un événement tel que, par exemple un choc se produisant sur une voiture en stationnement ou même un accident de la route et d'en déduire éventuellement les causes et les responsabilités. Elle est utilisable notamment par la justice, les forces de l'ordre, la sécurité routière et les compagnies d'assurance. Elle permet de réduire considérablement les coûts relatifs à des enquêtes et à tout ce qui contribue à la manifestation et à la détermination de la vérité.

On sait en effet que de nombreux chocs reçus par des voitures ou même des accidents de la route demeurent inexpliqués, les paramètres relevés après l'accident (traces de freinage, position de l'impact...) ne permettant pas de retracer d'une façon suffisamment sûre et précise, tous les événements qui se sont produits lors de l'accident et d'identifier tous les protagonistes de cet accident Ainsi, il s'avère que l'auteur d'une faute de conduite provoquant un accident, s'il n'est pas lui-même affecté par cet accident, peut échapper à toute poursuite. Il peut même ignorer les conséquences parfois dramatiques de la faute qu'il a commise (même si dans de nombreux cas, la responsabilité de l'accident se trouve partagée).

Par le document GB-A-2 268 608 (Norm Pacific Automat Corp) du 12 janvier 1994 on a déjà proposé une solution consistant à enregistrer dans un registre temporaire puis dans une mémoire permanente des données relatives à une pluralité de paramètres relatives aux conditions de conduite du véhicule et à des conditions environnementales ainsi qu'à des photos prises par un appareil de photos numériques. Ces paramètres permettent de détecter l'occurrence d'un accident et de le reconstituer après coup grâce à des logiciels d'animation.
Néanmoins, cette solution ne permet pas de visualiser l'accident avec une précision suffisante notamment lorsque le véhicule accidenté roule à une vitesse élevée.

Le document WO-A-00 17822 (ALBERTON ROALDO) du 30 mars 2000 prévoit l'enregistrement dans une mémoire pouvant consister en un disque dur de photos pendant une période relativement longue (1h) à une cadence de deux ou trois photos par seconde. Cette solution est donc sujette aux mêmes inconvénients que précédemment.

Le document WO-A-95 28783 (PRIMA FACIE INC) du 26 octobre 1995 propose un procédé consistant à combiner un signal vidéo et des signaux cryptés et à enregistrer le signal de sortie issu de cette combinaison dans une mémoire permanente pouvant entre autre consister en un disque dur. Le système ne prend pas en considération les problèmes relatifs aux temps de traitement du signal depuis la caméra jusqu'à la mémoire permanente.

L'invention a donc tout d'abord pour but de résoudre ce problème au moyen d'un dispositif pour la mémorisation d'une séquence visuelle à la suite de la détection d'un accident pouvant se produire à une vitesse pouvant aller de 0 à 200 km/h (ou plus), ce dispositif mettant en oeuvre un détecteur (9) situé à bord dudit véhicule, au moins une caméra embarquée (2, 3) apte à prendre des images numériques de l'espace environnant le véhicule, un circuit électronique de traitement et de mémorisation (4, 21) dans une mémoire tampon (5, 6) dans laquelle sont transférées lesdites informations, le détecteur (9) agissant sur ledit circuit électronique, lors de la détection d'un choc, de manière à déclencher le transfert des informations contenues dans la mémoire tampon dans une mémoire de stockage dans laquelle elles sont conservées, ainsi que des moyens de visualisation permettant de visualiser après coup les informations contenues dans la mémoire de stockage.

D'une façon plus précise, ce dispositif comprend les caractéristiques suivantes :
- Les images délivrées par la caméra (1, 2) sont stockées en continu dans la mémoire tampon (5, 6) de manière à ce qu'en régime permanent, à chaque instant, cette mémoire tampon contienne une séquence d'images délivrées par la caméra (1, 2) pendant une période de temps comprise entre zéro seconde et deux minutes précédant cet instant ;
- La cadence d'images délivrées par la caméra est d'au moins 25 images/seconde de manière à ce que le trajet parcouru par le véhicule entre deux images successives, à vitesse élevée, soit inférieure à 2 m de manière à reconstituer valablement l'accident ;
- Le transfert des données relatives à chaque pixel entre la caméra et la mémoire tampon s'effectue à chaque instant en temps réel sans utilisation d'un quelconque système de compression ;
- Le susdit circuit électronique (21) est conçu de manière à ce qu'à la suite de l'émission du signal de détection émis par le détecteur (25), il stoppe l'enregistrement des images dans la mémoire tampon (23) au bout d'une deuxième période de temps prédéterminée et il effectue ensuite le transfert des données enregistrées au cours des deux périodes successives (première et seconde) dans la mémoire de stockage (24), ce circuit de traitement et de mémorisation (4) comprenant des moyens permettant d'associer, à chaque image mémorisée dans la mémoire tampon, des paramètres tels que des informations d'horodatage et/ou la vitesse du véhicule et/ou l'état des freins, ces informations étant transférées dans la mémoire de stockage en même temps que les images qui leur correspondent ;
- La mémoire de stockage consiste en un disque dur, la capacité de cette mémoire de stockage étant prévue de manière à pouvoir stocker plusieurs séquences d'images ;
- Les moyens de visualisation sont conçus de manière à pouvoir effectuer des arrêts sur image permettant de visualiser à la fois le contenu d'une image et les paramètres instantanés associés à cette image.

Avantageusement, le susdit détecteur pourra consister en un détecteur de choc consistant en un accéléromètre pouvant également servir à la détection des mouvements du véhicule.

Par ailleurs, le susdit circuit électronique pourra être conçu de manière à ce qu'à la suite de l'émission du signal de détection émis par le détecteur, il stoppe l'enregistrement des images dans la mémoire tampon au bout d'une deuxième période de temps prédéterminée et il effectue ensuite le transfert des données enregistrées au cours des deux périodes successives (première et seconde) dans la mémoire de stockage.

Le susdit circuit électronique de traitement et/ou de mémorisation pourra comprendre des moyens permettant de visualiser le contenu de la mémoire tampon préalablement à son transfert éventuel dans la mémoire de stockage.

Dans le cas d'un dispositif faisant intervenir plusieurs caméras, le susdit circuit électronique de traitement et/ou de mémorisation pourra comprendre des moyens de sélectionner et de transférer dans la mémoire de stockage une séquence en provenance de l'une des caméras qui se trouve dans la mémoire tampon.

Il s'avère que l'un des problèmes les plus importants que pose la réalisation d'un dispositif du type susdit est celui de la mémorisation en temps réel des données numériques relatives aux images délivrées par les caméras.

En effet, la cadence usuelle des caméras est de 25 images par seconde et le nombre de pixels par image est au minimum de 280 000 pixels (700 x 400). Ceci signifie que pour une image noir et blanc, à 8 niveaux de gris, on aura à transférer 2 240 000 bits (8 x 280 000), soit pour une seconde (25 x 2 240 000) 56 Mbits.

Pour une séquence de 1 mn, la contenance de la mémoire tampon sera alors de 56 Mbits x 60 = 3,36 Gbits. Bien entendu, cette contenance devra être multipliée par le nombre de caméras utilisées et augmentée du volume de bits relatif aux informations complémentaires.

Par ailleurs, compte tenu de la vitesse que peut atteindre un véhicule automobile et notamment du fait que les accidents sont fréquemment dus à des excès de vitesse, le dispositif selon l'invention doit pouvoir fonctionner pour des vitesses de l'ordre de 200 km/h ou plus. Or, à cette vitesse, (≈ 55 m/s), le trajet que parcourt la voiture entre deux images successives est de ≈ 2 m. On constate donc que la cadence de 25 images/s est une cadence minimum en-dessous de laquelle il ne sera pas possible de reconstituer valablement l'accident.

Compte tenu de cette cadence, le transfert des données entre la caméra et le dispositif de mémorisation doit s'effectuer à une vitesse élevée sans qu'il soit possible d'utiliser un quelconque système de compression : un tel système exige en effet un temps de traitement incompatible avec les exigences de cette application.

Par ailleurs, l'emploi de certains types de mémoire, en particulier des mémoires flash pour lesquelles le transfert de données s'effectue en série est prohibé en raison de la lenteur de la mise en mémoire.

C'est la raison pour laquelle les tentatives de réalisation d'un dispositif tel que celui précédemment décrit n'ont pas pu aboutir.

Pour résoudre ces problèmes, l'invention propose d'utiliser un circuit électronique de traitement et de mémorisation présentant une structure de microordinateur équipé d'une mémoire RAM dédiée au stockage temporaire des données numériques délivrées par les caméras et dont la capacité correspond à celle précédemment évoquée, le transfert des données relatives à chaque pixel des caméras au microordinateur et à la mémoire vive s'effectue en parallèle de manière à réduire le temps de transfert et de chargement de la mémoire au strict minimum.

Le susdit circuit électronique de traitement et de mémorisation pourra également permettre d'assurer un deuxième mode de fonctionnement lorsque le véhicule est à l'arrêt et/ou en stationnement, ce circuit comprenant des moyens :
- pour transférer dans une mémoire tampon, des images délivrées par la caméra pendant une période prédéterminée succédant à l'émission du signal de détection,
- pour émettre un signal d'alarme pour informer que le détecteur a émis un signal de détection et qu'en conséquence une séquence d'images concernant les circonstances du choc est enregistrée dans la mémoire tampon,
pour permettre au conducteur d'effectuer une action de commande pour provoquer le transfert des images contenues dans la mémoire tampon, à la mémoire de stockage.

Le premier et le deuxième mode de fonctionnement pourront être déclenchés à la suite de la fermeture du contact général du véhicule et/ou lorsqu'un déplacement du véhicule est détecté.

Des modes d'exécution de l'invention seront décrits ci-après, à titre d'exemples non limitatifs, avec référence aux dessins annexés dans lesquels :
La figure 1 est un schéma de principe d'un dispositif selon l'invention équipant une automobile ;
La figure 2 est un schéma de principe d'une variante d'exécution du dispositif selon l'invention.

Dans cet exemple, l'automobile 1 est équipée de deux caméras 2, 3 respectivement disposées dans la partie supérieure du pare-brise et de la lunette arrière.

Les images délivrées par ces deux caméras 2, 3 sont transmises à un circuit électronique de traitement 4 relié à deux unités de mémorisation 5, 6 (par exemple les mémoires tampon pouvant consister en des mémoires volatiles de type RAM) montées en parallèle, par l'intermédiaire d'un organe de composition de messages numériques 7. L'ensemble comprenant l'unité électronique de traitement et les unités de mémorisation 5, 6 et l'organe de composition des messages, peut présenter une structure analogue à celle d'un microordinateur.

Avantageusement, le transfert des données relatives à chaque pixel balayé par la caméra, au circuit de traitement électronique, s'effectue en parallèle de manière à réduire autant que possible les temps de transfert et de mémorisation.

Chacune des unités de mémorisation 5, 6 a une capacité correspondant à une séquence de messages numériques d'une durée prédéterminée par exemple de 0 seconde à 1 minute. Sa structure est celle d'une pile FIFO dans laquelle la première information introduite est la première extraite (la dernière information introduite provoque l'extraction ou l'effacement de la première information rentrée contenue dans la pile).

L'organe de composition de messages numériques 7 est également connecté à un organe de détection 8 de l'état du contact général de la voiture, à un accéléromètre 9 apte à détecter des chocs ainsi que des déplacements de l'automobile, à un compteur de vitesse 10 ainsi qu'à un dispositif de détection 11 de l'état (freinage/absence de freinage) des freins.

Cet organe 7 est conçu de manière à composer une succession de messages M₁, M₂... Mₙ, M'₁, M'₂... M'ₙ à une cadence égale à celle d'une caméra 2, 3 (par exemple 25 images/s) chaque message numérique comprenant une image I prise par la caméra, des données d'horodatage D et des données V relatives à la vitesse et à l'état des freins F.

L'alimentation des caméras 2, 3, du circuit électronique de traitement 4, de l'organe de composition 7 et de la mémoire 5, 6 est assurée par un circuit d'alimentation commandé à partir d'une unité de commande 12 connectée à l'accéléromètre et au détecteur 8 de l'état du contact général de la voiture.

Le fonctionnement du dispositif précédemment décrit est alors le suivant :
Lors de la mise en route de l'automobile, le circuit d'alimentation prend en compte la fermeture du contact général d'alimentation et après détection éventuelle d'un déplacement par l'accéléromètre 9, provoque l'alimentation de l'ensemble du dispositif en courant électrique.

De ce fait, à chaque instant, chacune des deux unités de mémoire 5, 6 stocke un nouveau message de sorte qu'après une période transitoire, elle contient une séquence de messages incluant les images prises dans une période de temps prédéterminée (par exemple de 0 seconde à 1 minute) ainsi que les informations précédemment évoquées associées à chacune de ces images.

Lorsqu'il se produit un choc important, l'accéléromètre 9 transmet à l'organe de composition et de gestion de la mémoire un signal qui provoque le transfert du contenu des mémoires 5, 6 dans une mémoire de stockage, ici un disque dur.

Les séquences contenues dans la mémoire de stockage ou le disque dur peuvent être alors extraites de manière à pouvoir être lues postérieurement, par exemple sur l'écran d'un terminal informatique classique T.

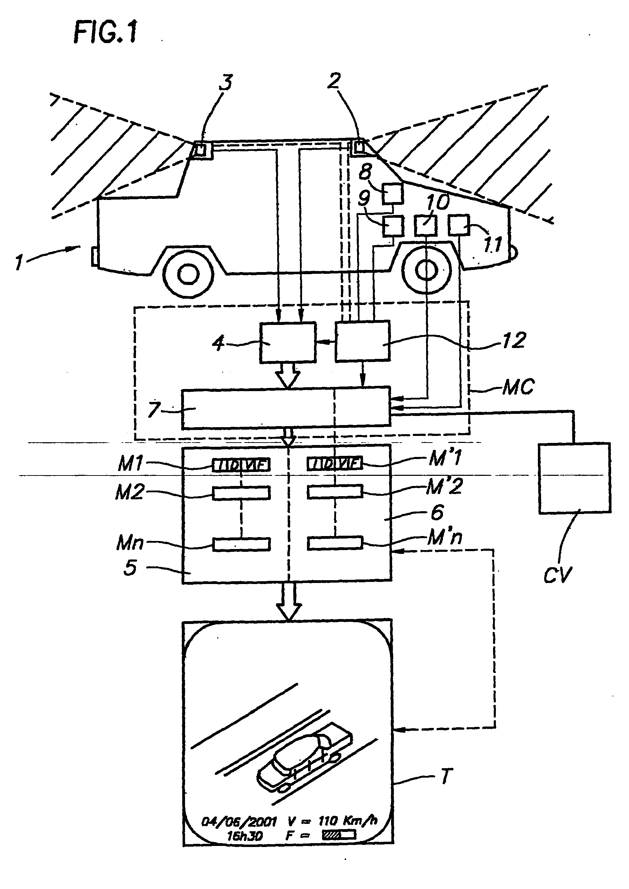

Lors de la lecture de cette séquence, l'opérateur pourra effectuer des arrêts sur image, éventuellement zoomés, lui permettant de visualiser à la fois le contenu de l'image et les paramètres instantanés (vitesse/heure/freinage) comme indiqué sur la figure 1.

Bien entendu, des dispositions pourront être prises pour rendre infalsifiables les informations contenues dans le disque dur ainsi que des moyens de cryptage pour éviter toute utilisation de ces informations par des personnes non habilitées.

Lorsque la voiture s'arrête, le capteur accélérométrique 9 transmet une information correspondante au circuit électronique de traitement et à l'organe de composition qui interrompt la composition de messages et leur transmission à la mémoire 5, 6. Parallèlement, l'alimentation des caméras 2, 3 peut être éventuellement coupée.

Lorsque ensuite survient un choc, le signal transmis par l'accéléromètre 9 provoque la mise en service des caméras.2, 3, du circuit électronique 4, de l'organe de composition 7 et de la mémoire 5, 6.

Celle-ci enregistre alors une double séquence de messages émise par l'organe 7 pendant une période prédéterminée par exemple de 0 seconde à 1 minute suivant l'instant où a été détecté le choc.

A l'issue de cette période, l'organe de composition et de gestion 7 de la mémoire 5, 6 engendre un signal qui provoque le transfert du contenu des mémoires 5, 6 dans une mémoire de stockage, ici le disque dur.

De la même façon que précédemment, la séquence contenue dans la mémoire de stockage ou le disque dur pourra être extraite de manière à pouvoir être lue postérieurement dans le but de déterminer les circonstances du choc et d'identifier son auteur (lecture de la plaque d'immatriculation de la voiture qui a produit le choc).

Avantageusement, l'ensemble comprenant le circuit électronique de traitement 4, l'organe de composition de messages et de gestion 7 de la mémoire 5, 6, et l'unité de commande 12 pourra être intégré dans un microcontrôleur MC (indiqué en traits interrompus).

Optionnellement, la voiture pourra être en outre équipée d'une console de visualisation CV permettant de visualiser les images filmées par les caméras. Cette disposition permet notamment au pilote de voir et d'éviter les obstacles éventuels se trouvant sur sa trajectoire lors d'une manoeuvre.

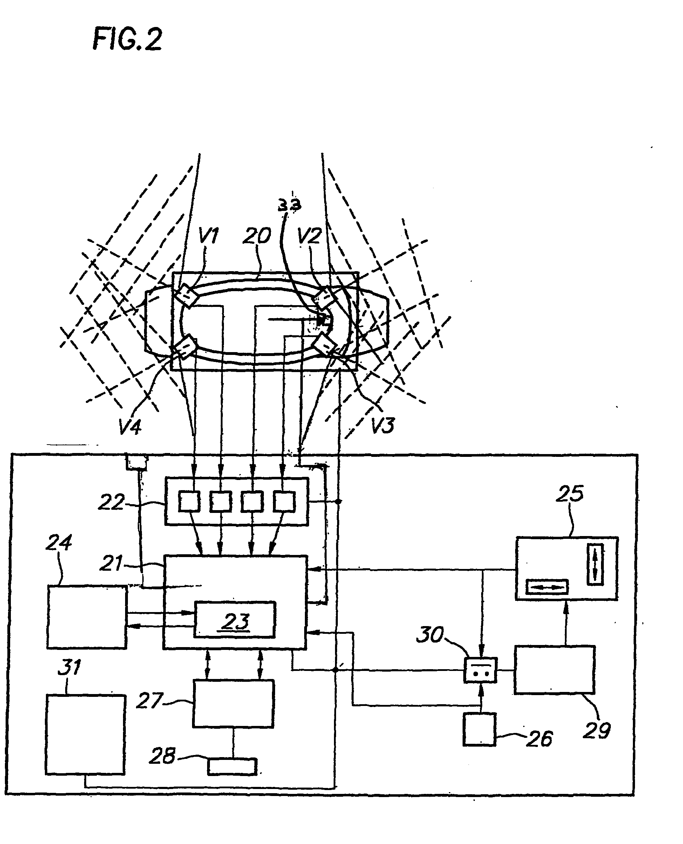

Dans l'exemple représenté sur la figure 2, le dispositif fait intervenir quatre caméras V₁ à V₄, par exemple, avec lentille à iris automatique. Deux de ces caméras V₂, V₃ sont fixées à l'avant du véhicule 20, tandis que les deux autres V₁, V₄ sont fixées à l'arrière.

Ces caméras V₁, V₄ sont connectées à un microordinateur comportant un microprocesseur 21 par l'intermédiaire d'un circuit d'interface 22 comprenant quatre ports parallèles. Ce microprocesseur 21, de type classique, est associé à des mémoires mortes ROM et à une mémoire vive 23 de capacité importante, par exemple, de deux Giga octets.

Ce microprocesseur 21 est, en outre, connecté à une mémoire non volatile et non réinscriptible 24 consistant de préférence en un disque dur, par exemple de dix Giga octets.

En fait, la mémoire vive 23 doit être en mesure de stocker en continu une séquence d'images produites par les caméras V₁ à V₄, pendant une durée prédéterminée, par exemple de 25 secondes.

La mémoire non volatile 24 sera alors dimensionnée de manière à pouvoir stocker un nombre prédéterminé de séquences d'images, par exemple cinq séquences.

Le microprocesseur 21 reçoit, en outre, des informations émanant, d'une part, d'un accéléromètre biaxe 25 sensible à des accélérations selon un axe longitudinal et un axe transversal et, d'autre part, de l'interrupteur de contact général 26 du véhicule 20.

Il est connectable à des périphériques grâce à un interface 27 et à un connecteur 28 de type classique. Cet interface 27 est notamment destiné à récupérer les images stockées dans la mémoire non volatile ou le disque dur 24. Il peut comprendre des moyens de connexion d'un afficheur permettant de visualiser en temps réel les images émanant des caméras V₁ à V₄ et éventuellement les séquences d'images stockées dans la mémoire non volatile ou le disque dur 24. Cet afficheur pourra avantageusement consister un l'afficheur du dispositif GPS (Global Positioning System) du véhicule.

L'alimentation de l'ensemble des circuits électroniques de ce dispositif s'effectue au moyen d'une batterie 29 présentant une autonomie de 5 à 10 minutes, elle-même alimentée à partir de la batterie de la voiture. Cette batterie 29 est directement connectée à l'accéléromètre 25 qui effectue une veille permanente. Par contre, l'alimentation des autres circuits électroniques du dispositif s'effectue par l'intermédiaire d'un interrupteur commandable 30, piloté par l'accéléromètre 25 et par l'interrupteur du contact général 26 du véhicule.

De préférence, l'ensemble du circuit électronique est logé dans une enceinte étanche, résistante au feu et aux agressions mécaniques. Cette enceinte est équipée d'un dispositif de régulation de température 31 faisant par exemple intervenir une cellule à effet Peltier : ce dispositif s'avère, en effet, nécessaire en raison des écarts (hiver, été) de température qui se produisent à l'intérieur de la voiture et qui vont au-delà de la plage de température requise pour un fonctionnement correct des circuits électroniques utilisés.

Le fonctionnement du dispositif précédemment décrit est alors le suivant :
Selon le premier mode de fonctionnement, le véhicule étant à l'arrêt ou en stationnement, seul le capteur accélérométrique 25 est alimenté par la batterie 29 (veille), l'interrupteur 30 étant ouvert.

Lorsque se produit un choc d'une amplitude supérieure à un seuil prédéterminé, le capteur accélérométrique 25 ferme le contact 30 de manière à alimenter l'ensemble des circuits électroniques du dispositif. Le microprocesseur 21 procède à la mémorisation dans la mémoire tampon 23 des données numériques délivrées par les caméras V₁ à V₄ qui filment alors l'environnement du véhicule pendant une période de temps prédéterminée. Parallèlement le microprocesseur 21 active un circuit d'avertissement 33 destiné à informer le conducteur que pendant son absence, le détecteur a détecté un choc et que par conséquent une séquence d'images susceptibles de déterminer les causes du choc se trouve enregistrée dans la mémoire tampon 23. Ce signal d'avertissement sonore et/ou visuel peut être par exemple déclenché en permanence ou seulement lorsque le conducteur ouvre sa porte pour rentrer dans son véhicule.

Le conducteur est alors invité à examiner le véhicule pour savoir s'il a été endommagé par le choc.

Si le véhicule n'est pas endommagé, le conducteur ne tient pas compte de l'avertissement et la séquence mémorisée dans la mémoire tampon 23 ne sera pas transférée dans la mémoire de stockage 24 (pour éviter de la charger inutilement) optionnellement, il pourra provoquer l'effacement de la mémoire tampon en agissant par exemple, sur un bouton connecté au microprocesseur 21.

Par contre, si le conducteur constate la présence d'une détérioration occasionnée par le choc, le conducteur pourra provoquer le transfert des images contenues dans la mémoire tampon 23 à la mémoire de stockage 24. Ce transfert peut être par exemple obtenu en agissant sur un bouton 34 connecté au microprocesseur 21.

La mémoire de stockage 24 qui est inviolable et infalsifiable contiendra donc des informations relatives aux circonstances du choc et permettra donc de déterminer éventuellement son auteur. Ces informations seront alors présumées provenir de la caméra la mieux orientée vis à vis du choc.

Le conducteur pourra alors procéder à la lecture des images contenues dans la mémoire de stockage, par exemple sur un ordinateur portable venant se connecter sur les moyens de connexion 28 ou sur l'écran GPS (Global Positioning System) du véhicule si celui-ci en est équipé

En visualisant successivement les séquences délivrées par les caméras, le conducteur pourra déterminer celle qui contient les informations utiles ou intéressantes concernant le choc. Il pourra alors procéder au transfert des images de cette caméra sur un support d'enregistrement tel qu'une cassette ou une carte mémoire flash via le connecteur 28. Il pourra ensuite adresser ce support par exemple à son assureur accompagné d'un constat

Selon le deuxième mode de fonctionnement, l'alimentation en courant électrique de l'ensemble du circuit électronique s'effectue à la suite de la détection d'un déplacement par le capteur accéléromètrique 25 (qui est alimenté en permanence) et/ou à la suite de l'action sur le contact général 26 pour démarrer le véhicule.

Les images prises par les caméras V₁ à V₄ sont alors transmises via l'interface 22 au microprocesseur 21 qui les stocke dans la mémoire vive 23, laquelle, à chaque instant, contient les images délivrées par les quatre caméras pendant une période par exemple de 25 secondes précédant cet instant.

Dans le cas où, ensuite, l'accéléromètre 25 détecte une accélération révélatrice d'un choc d'une amplitude supérieure à un seuil prédéterminé, ce microprocesseur 21 stoppe l'enregistrement des images dans la mémoire vive au bout de 5 secondes.

Il procède ensuite au transfert de toutes les informations, comprises dans la mémoire vive 23, reçues au cours des deux périodes de temps successives (par exemple de 25 secondes .et de 5 secondes) dans la mémoire non volatile ou le disque dur 24.

Lorsque le véhicule redémarre le microprocesseur 21 qui reçoit une information de démarrage, en provenance du contact général du véhicule, procède à une réinitialisation des circuits électroniques et, en particulier, de la mémoire vive 23. Par contre, il n'intervient pas sur la mémoire non volatile ou le disque dur qui conserve, en conséquence, les informations précédemment enregistrées. Il procède ensuite à l'enregistrement dans la mémoire tampon des images provenant des caméras V₁ à V₄.

Ce processus pourra être répété plusieurs fois (par exemple cinq fois) en fonction de la capacité de la mémoire non volatile (ou du disque dur), c'est-à-dire jusqu'à ce que la mémoire non volatile ou le disque dur 24 soit rempli. Il conviendra alors de changer la mémoire non volatile 24 ou de la formater selon la procédure qui aura été établie.

Grâce à l'interface 27, les données chargées dans la mémoire non volatile ou le disque dur 24 pourront être transférées dans la mémoire d'un ordinateur. Elles pourront alors être visualisées en lecture normale, en avant, en arrière, image par image, en effectuant éventuellement des zooms.

Bien entendu, le microprocesseur 21 pourra être connecté, comme dans l'exemple précédent, avec divers capteurs effectuant la détection de paramètres propres au véhicule, voire même relatifs à la conduite de ce véhicule.

Ces paramètres pourront être visualisés en même temps que les images de manière à permettre une meilleure compréhension des circonstances dans lesquelles s'est produit le choc.

## Revendications

1. Dispositif pour la mémorisation d'une séquence visuelle à la suite de la détection d'un accident d'un véhicule pouvant se produire jusqu'à une vitesse de l'ordre de 200 km/h (ou plus), ce dispositif mettant en oeuvre un détecteur (9) situé à bord dudit véhicule, au moins une caméra embarquée (2, 3) apte à prendre des images numériques de l'espace environnant le véhicule, un circuit électronique de traitement et de mémorisation (4, 21) dans une mémoire tampon (5, 6) dans laquelle sont transférées lesdites images, le détecteur (9) agissant sur ledit circuit électronique, lors de la détection d'un choc, de manière à déclencher le transfert des images contenues dans la mémoire tampon dans une mémoire de stockage dans laquelle elles sont conservées, ainsi que des moyens de visualisation permettant de visualiser après coup les images contenues dans la mémoire de stockage,
**caractérisé en ce que** :
- Les images délivrées par la caméra (1, 2) sont stockées en continu dans la mémoire tampon (5, 6) de manière à ce qu'en régime permanent, à chaque instant, cette mémoire tampon contienne une séquence d'images délivrées par la caméra (1, 2) pendant une période de temps comprise entre zéro seconde et deux minutes précédant cet instant ;
- La cadence d'images délivrées par la caméra est d'au moins 25 images/seconde de manière à ce que le trajet parcouru par le véhicule entre deux images successives, à vitesse élevée, soit inférieure à 2 m de manière à reconstituer valablement l'accident ;
- Le transfert des données relatives à chaque pixel entre la caméra et la mémoire tampon s'effectue à chaque instant en temps réel sans utilisation d'un quelconque système de compression ;
- Le susdit circuit électronique (21) est conçu de manière à ce qu'à la suite de l'émission du signal de détection émis par le détecteur (25), il stoppe l'enregistrement des images dans la mémoire tampon (23) au bout d'une deuxième période de temps prédéterminée et il effectue ensuite le transfert des données enregistrées au cours des deux périodes successives (première et seconde) dans la mémoire de stockage (24), ce circuit de traitement et de mémorisation (4) comprenant des moyens permettant d'associer, à chaque image mémorisée dans la mémoire tampon, des paramètres tels que des informations d'horodatage et/ou la vitesse du véhicule et/ou l'état des freins, ces informations étant transférées dans la mémoire de stockage en même temps que les images qui leur correspondent ;
- La mémoire de stockage consiste en un disque dur, la capacité de cette mémoire de stockage étant prévue de manière à pouvoir stocker plusieurs séquences d'images ;
- Les moyens de visualisation sont conçus de manière à pouvoir effectuer des arrêts sur image permettant de visualiser à la fois le contenu d'une image et les paramètres instantanés associés à cette image.

2. Dispositif selon la revendication 1,
**caractérisé en ce que** le susdit détecteur de choc (9) consiste en un accéléromètre biaxe sensible selon un axe longitudinal et un axe transversal du véhicule.

3. Dispositif selon l'une des revendications précédentes,
**caractérisé en ce que**, lorsque le véhicule redémarre après la susdite détection, il procède à la réinitialisation de la mémoire tampon (23) et lance un programme permettant de conserver les informations précédemment enregistrées sur le disque dur (24).

4. Dispositif selon l'une des revendications précédentes,
**caractérisé en ce qu'**il comprend au moins deux caméras (V₁ à V₄) (de préférence deux paires), respectivement montées à l'avant et à l'arrière du véhicule.

5. Dispositif selon l'une des revendications précédentes,
**caractérisé en ce que** l'alimentation de la caméra (2, 3), du circuit électronique de traitement et de mémorisation est assurée par un circuit d'alimentation commandé à partir d'une unité de commande (12) connectée à l'accéléromètre et à un détecteur (8) de l'état du contact général de la voiture, cette unité de commande étant conçue de manière à ce que lors de la mise en route du véhicule, le circuit d'alimentation prend en compte la fermeture du contact général d'alimentation et, après détection éventuelle d'un déplacement par l'accéléromètre (9), provoque l'alimentation de l'ensemble du dispositif en courant électrique.

6. Dispositif selon l'une des revendications précédentes,
**caractérisé en ce que** le circuit électronique de traitement (4) et de mémorisation (5) permet d'assurer un deuxième mode de fonctionnement lorsque le véhicule est à l'arrêt et/ou en stationnement, ce circuit comprenant des moyens :
- pour transférer dans une mémoire tampon, des images délivrées par la caméra pendant une période prédéterminée succédant à l'émission du signal de détection,
- pour émettre un signal d'alarme pour informer que le détecteur a émis un signal de détection et qu'en conséquence une séquence d'images concernant les circonstances du choc est enregistrée dans la mémoire tampon,
- pour permettre au conducteur d'effectuer une action de commande pour provoquer le transfert des images contenues dans la mémoire tampon, à la mémoire de stockage.

7. Dispositif selon la revendication 6,
**caractérisé en ce que** le susdit circuit électronique de traitement et/ou de mémorisation comprend des moyens permettant de visualiser le contenu de la mémoire tampon préalablement à son transfert éventuel dans la mémoire de stockage.

8. Dispositif selon l'une des revendications précédentes, faisant intervenir plusieurs caméras,
**caractérisé en ce que** le susdit circuit électronique de traitement et/ou de mémorisation comprend des moyens de sélectionner et de transférer dans la mémoire de stockage une séquence en provenance de l'une des caméras qui se trouve dans la mémoire tampon.

## Claims

1. Device for memorising a visual sequence following the detection of the accident of a vehicle that may occur up to a speed of approximately 200 kph or more, wherein this device uses a detector (9) located on board said vehicle, at least one on board camera (2, 3) capable of taking digital images of the space surrounding the vehicle, an electronic circuit for processing and memorising (4, 21) in a buffer memory (5, 6) into which said images are transferred, the detector (9) acting on said electronic circuit, when an impact is detected, so as to trigger the transfer of the images contained in the buffer memory to a storage memory in which they are kept, as well as viewing means that permit the images contained in the storage memory to be viewed afterwards, **characterised in that**:
- the images supplied by the camera (1, 2) are stored continuously in the buffer memory (5, 6) so that at a permanent feed, at all times, this buffer memory contains a sequence of images provided by the camera (1, 2) during a period of time of between zero seconds and two minutes prior to this instant;
- the rate of images supplied by the camera is at least 25 images/second, so that the trajectory followed by the vehicle between two successive images, at high speed, is less than 2 m in order to reconstruct the accident validly;
- the transfer of the data relative to each pixel between the camera and the buffer memory is carried out at each instant in real time without the use of any compression systems;
- the above mentioned electronic circuit (21) is designed so that following the emission of the detection signal emitted by the detector (25), it stops the recording of images in the buffer memory (23) after a second predetermined period of time and it then carries out the transfer of the data stored during two successive periods (first and second) in the storage memory (24), wherein this processing and memorising circuit (4) comprises means of associating, to each image stored in the buffer memory, parameters such as time/date information and/or the speed of the vehicle and/or the condition of the brakes, wherein this information is transferred to the storage memory at the same time as the corresponding images;
- the storage memory consists of a hard disk, the capacity of this storage memory being provided so that it can store several sequences of images;
- the viewing means are designed so that the images may be paused, in order that the contents of an image may be viewed as well as the instantaneous parameters associated to this image.

2. Device of claim 1,
**characterised in that** the above mentioned impact detector (9) consists of a sensitive biaxial accelerometer in a longitudinal axis and a transversal axis of the vehicle.

3. Device of any of the previous claims,
**characterised in that**, when the vehicle is started after the above mentioned detection, it reinitialises the buffer memory (23) and runs a programme that permits the information previously stored onto the hard disk (24) to be conserved.

4. Device of any of the previous claims,
**characterised in that** it comprises at least two cameras (V₁ to V₄) (preferably two pairs), respectively fitted at the front and the rear of the vehicle.

5. Device of any of the previous claims,
**characterised in that** the camera (2, 3) and the electronic processing and memorising circuit are powered by a power supply circuit controlled from a central control unit (12) connected to the accelerometer and to a detector (8) of the state of general contact of the vehicle, wherein this control unit is designed so that when the vehicle is started, the power supply circuit takes into account the closure of the general power supply contact and, after any possible detection of movement by the accelerometer (9), causes the powering of the entire device with an electrical current.

6. Device of any of the previous claims,
**characterised in that** the electronic processing (4) and memorising circuit (5) permit a second operating mode to be run when the vehicle is stopped and/or parked, wherein this circuit comprises means:
- of transferring to a buffer memory, images supplied by the camera during a predetermined period following the emission of the detection signal,
- of emitting an alarm signal to inform that the detector has emitted a detection signal and that consequently a sequence of images concerning the circumstances of the impact has been stored in the buffer memory,
- of allowing the driver to make a command to transfer the images contained in the buffer memory to the storage memory.

7. Device of claim 6,
**characterised in that** the above mentioned electronic circuit for processing and/or memorising comprises means that permit the contents of the buffer memory to be viewed prior to its possible transfer to the storage memory.

8. Device of any of the previous claims, using several cameras,
**characterised in that** the above mentioned electronic circuit for processing and/or memorising comprises means for selecting and transferring to the storage memory a sequence from one of the cameras that is stored in the buffer memory.

## Patentansprüche

1. Vorrichtung zur Speicherung einer visuellen Sequenz nach der Erfassung eines Unfalls von einem Fahrzeug, der bis zu einer Geschwindigkeit von ungefähr 200 km/h (oder mehr) auftreten kann, wobei diese Vorrichtung einen Detektor (9), der sich an Bord des genannten Fahrzeugs befindet, in Betrieb setzt und mindestens eine Bord-Kamera (2, 3), die dazu fähig ist, digitale Bilder des das Fahrzeug umgebenden Raumes aufzunehmen, und eine elektronische Verarbeitungs- und Speicherungsschaltung (4, 21) in einem Pufferspeicher (5, 6) in Betrieb setzt, in welchem besagte Bilder übertragen sind, wobei der Detektor (9) bei Erfassung eines Zusammenstosses auf besagte elektronische Schaltung einwirkt, um die Übertragung der im Pufferspeicher enthaltenen Bilder in einem Festplattenspeicher, worin diese aufbewahrt sind, auszulösen, sowie Sichtanzeigemittel in Betrieb setzt, womit es ermöglicht ist, die im Speicher enthaltenen Bilder nach ihrer Aufnahme zu visualisieren, **gekennzeichnet dadurch, dass**:
- die von der Kamera (1, 2) ausgegebenen Bilder kontinuierlich im Dauerbetrieb und in jedem Augenblick im Pufferspeicher (5, 6) gespeichert werden, wobei dieser Pufferspeicher eine Sequenz von durch die Kamera (1, 2) während einer Zeitperiode zwischen Null und zwei Minuten vor diesem Augenblick ausgegebenen Bildern enthält;
- der Takt der von der Kamera ausgegebenen Bilder beträgt mindestens 25 Bilder/Sekunde, so dass die vom Fahrzeug durchfahrene Strecke zwischen zwei aufeinander folgenden Bildern, bei erhöhter Geschwindigkeit, unter 2 m liegt, um den Unfall annehmbar originalgetreu nachzubilden;
- die Übertragung der jedem Pixel entsprechenden Daten zwischen der Kamera und dem Pufferspeicher wird in jedem Augenblick in Echtzeit ohne Benutzung eines beliebigen Kompressionssystems ausgeführt;
- die besagte elektronische Schaltung (21) ist so konzipiert, dass sie nach der Ausgabe des durch den Detektor (25) ausgelösten Erfassungssignals die Eingabe der Bilder im Pufferspeicher (23) am Ende von einer zweiten vorgegebenen Zeitperiode stoppt und danach die Übertragung der Daten im Verlaufe der zwei aufeinander folgenden Perioden (erste und zweite) im Festplattenspeicher (24) aufnimmt, wobei diese Verarbeitungs- und Speicherschaltung (4) Mittel umfasst, womit es ermöglicht ist, jedem im Pufferspeicher gespeicherten Bild Parameter zuzuordnen, wie Informationen über Zeitstempelung und/oder über die Geschwindigkeit des Fahrzeugs und/oder über den Zustand der Bremsen, wobei diese Informationen zur gleichen Zeit in den Festplattenspeicher übertragen werden wie die Bilder, die diesen Informationen entsprechen;
- der Festplattenspeicher besteht aus einer Festplatte und dessen Kapazität ist so vorgesehen, um mehrere Bildersequenzen speichern zu können;
- die Anzeigemittel sind so konzipiert, um auf dem Bild Stoppungen durchführen zu können, womit es ermöglicht ist, gleichzeitig den Inhalt eines Bildes und den augenblicklichen mit diesem Bild verbundenen Parameter zu visualisieren.

2. Vorrichtung nach Anspruch 1, **gekennzeichnet dadurch, dass** der besagte Zusammenstossdetektor (9) aus einem sensiblen zweiachsigen Beschleunigungsmesser gemäß einer Längsachse und einer Querachse des Fahrzeugs besteht.

3. Vorrichtung nach einem der vorangehenden Ansprüche, **gekennzeichnet dadurch, dass**, wenn das Fahrzeug nach der besagten Ermittlung wieder anläuft, es zur Neuinitialisierung des Pufferspeichers (23) übergeht und ein Programm aufgibt, womit es ermöglicht ist, die vorher registrierten Informationen auf der Festplatte (24) aufzubewahren.

4. Vorrichtung nach Anspruch 1, **gekennzeichnet dadurch, dass** sie mindestens zwei Kameras (V₁ bis V₄) (vorzugsweise zwei Paare) umfasst, die jeweils vorne und hinten am Fahrzeug montiert sind.

5. Vorrichtung nach einem der vorangehenden Ansprüche, **gekennzeichnet dadurch, dass** die Einspeisung der Kamera (2, 3) der elektronischen Verarbeitungs- und Speicherungsschaltung über einen Einspeisungsschaltkreis abgesichert ist, der von einer Steuereinheit (12) aus gesteuert wird, die an einen Beschleunigungsmesser und an einen Detektor (8) des Zustandes des allgemeinen Kontaktes des Autos angeschlossen ist, wobei diese Steuereinheit so konzipiert ist, dass der Einspeisungsschaltkreis nach Anfahren des Fahrzeugs auf der Fahrbahn das Schließen des allgemeinen Einspeisungskontakts berücksichtigt und nach Ermittlung einer Verschiebung durch den Beschleunigungsmesser (9) die Einspeisung des Komplexes der elektrischen Vorrichtung bewirkt.

6. Vorrichtung nach einem der vorangehenden Ansprüche, **gekennzeichnet dadurch, dass** die elektronische Verarbeitungs- (4) und Speicherungsschaltung (5) es gestattet, einen zweiten Betriebsmodus zu sichern, wenn das Fahrzeug beim Anhalten und/oder beim Parken ist, wobei dieser Schaltkreis folgende Mittel umfasst:
- um in einen Pufferspeicher die Bilder zu übertragen, die von der Kamera während einer vorgegebenen, nach der Emission des Feststellungssignals folgenden Periode, ausgegeben wurden,
- um ein Alarmsignal auszugeben, zur Information, dass der Detektor ein Erfassungssignal ausgegeben hat und infolgedessen eine Bildersequenz, die die Umstände des Zusammenstosses betreffen, im Pufferspeicher aufgenommen wird,
- um dem Fahrer eine Steuerung zur Übertragung der im Pufferspeicher enthaltenen Bilder in den Speicherungsspeicher zu gestatten.

7. Vorrichtung nach Anspruch 6, **gekennzeichnet dadurch, dass** die besagte Verarbeitungsschaltung und/ oder die Speicherungsschaltung Mittel umfasst, womit es ermöglicht ist, den Inhalt des Pufferspeichers vor dessen eventuellen Übertragung in den Festplattenspeicher zu visualisieren.

8. Vorrichtung nach einem der vorangehenden Ansprüche, unter Einschaltung von mehreren Kameras, **gekennzeichnet dadurch, dass** die besagte elektronische Verarbeitungsschaltung und/ oder Speicherungsschaltung Mittel umfasst, um im Festplattenspeicher eine Bildersequenz auszuwählen und zu übertragen, die aus einer der Kameras stammen, die sich im Pufferspeicher befinden.
